# EUROPÄISCHE PATENTANMELDUNG

(11) **EP 4 300 469 A1**
(43) Veröffentlichungstag der Anmeldung: **03.01.2024**
(21) Anmeldenummer: 23180639.9
(22) Anmeldetag: 21.06.2023
(51) Int. Cl.: G09F 3/00, G09F 3/03, G09F 3/02

(54) **MULTIFUNKTIONSETIKETT, SYSTEM UND VERFAHREN ZUM HERSTELLEN EINES MULTIFUNKTIONSETIKETTS**

(30) Priorität: 28.06.2022 DE 102022116021
(71) Anmelder: Schreiner Group GmbH & Co. KG, 85764 Oberschleissheim (DE)
(72) Erfinder: Achsnich, Melanie, 80997 München (DE); Probian, Dirk, 86405 Meitingen (DE)
(74) Vertreter: Epping - Hermann - Fischer

(57) **Zusammenfassung**

Ein Multifunktionsetikett (1) für ein mehrteiliges Gefäß (30) weist ein Transponderinlay (10) mit einer Elektronikeinheit (13) und einer Detektionsschleife (16) auf, die auf einer Trägerschicht (11) des Transponderinlays (10) angeordnet und signaltechnisch miteinander gekoppelt sind. Die Trägerschicht (11) weist im Bereich der Detektionsschleife (16) eine vorgegeben eingebrachte lokale Materialschwächung (12) auf. Das Multifunktionsetikett (1) umfasst weiter ein Etikett (20) mit zumindest einer Etikettenschicht (21), die eine vorgegeben eingebrachte lokale Materialschwächung (22) aufweist. Das Transponderinlay (10) und die Etikettenschicht (21) sind unmittelbar oder mittelbar miteinander gekoppelt, sodass sich die Materialschwächung (22) der Etikettenschicht (21) und die Materialschwächung (12) der Trägerschicht (11) bezogen auf eine laterale Ausdehnung (L) des Multifunktionsetiketts (1) zumindest abschnittsweise überlappen.

## Beschreibung

Die vorliegende Erfindung betrifft ein Multifunktionsetikett, das auf einfache und kostengünstige Weise einen zuverlässigen Schutz für einen Inhalt eines Gefäßes ermöglicht. Die Erfindung betrifft ferner ein System mit einem solchen Multifunktionsetikett und ein Verfahren zum Herstellen eines solchen Multifunktionsetiketts.

Etiketten können der Autorisierung oder dem Herkunftsnachweis dienen und überall dort zum Einsatz kommen, wo es notwendig ist, Gegenstände zu identifizieren oder zu verifizieren. Einige Etiketten weisen Funktionen auf, die zum Beispiel auf Basis elektronischer Bauteile ein komfortables Auffinden und elektronisches Erfassen von Informationen der Etiketten und damit versehener Informationen ermöglichen. Etiketten können ferner einen Sichtschutz einrichten oder einen Öffnungsnachweis bereitstellen.

Es ist eine Aufgabe, die der Erfindung zugrunde liegt, ein Multifunktionsetikett bereitzustellen, das auf einfache und kostengünstige Weise herstellbar ist und das einen zuverlässigen Schutz für einen Inhalt eines Gefäßes ermöglicht.

Die Aufgabe wird durch die Merkmale der unabhängigen Patentansprüche gelöst. Vorteilhafte Weiterbildungen sind in den jeweiligen abhängigen Patentansprüchen angegeben.

Gemäß einem Aspekt der Erfindung umfasst ein Multifunktionsetikett für ein mehrteiliges Gefäß ein Transponderinlay mit einer Elektronikeinheit und einer Detektionsschleife, die auf einer Trägerschicht des Transponderinlays angeordnet und signaltechnisch miteinander gekoppelt sind. Die Trägerschicht weist im Bereich der Detektionsschleife eine vorgegeben eingebrachte lokale Materialschwächung auf. Das Multifunktionsetikett umfasst weiter ein Etikett mit mindestens einer Etikettenschicht, die auch eine vorgegeben eingebrachte lokale Materialschwächung aufweist. Das Transponderinlay und das Etikett beziehungsweise die Trägerschicht und die Etikettenschicht sind unmittelbar oder mittelbar miteinander gekoppelt, sodass sich die Materialschwächung der Etikettenschicht und die Materialschwächung der Trägerschicht bezogen auf eine laterale Ausdehnung und in Blickrichtung entlang einer Stapelrichtung des Multifunktionsetiketts zumindest abschnittsweise überlappen.

Mittels des beschriebenen Multifunktionsetiketts kann auf einfache und kostengünstige Weise ein zuverlässiger Schutz zum Beispiel für pharmazeutische Produkte realisiert werden. Die Materialschwächungen bilden einen jeweiligen Bereich, in dem die zugehörigen Schichten kontrolliert durchtrennt werden können, sodass eine Erstöffnung optisch sichtbar und elektronisch messbar ist. Das Transponderinlay stellt eine elektronische oder digitale Erstöffnungsanzeige und das Etikett eine optische oder analoge Erstöffnungsanzeige bereit. Das Multifunktionsetikett realisiert somit ein Tamper-Etikett mit kombiniertem Öffnungsprinzip.

Es ist eine Erkenntnis im Zusammenhang mit der vorliegenden Erfindung, dass pharmazeutische Produkte, insbesondere biotechnologisch hergestellte Arzneimittel, zuverlässig gegen eine Manipulation geschützt werden sollen. Zudem benötigen viele pharmazeutische Produkte als Sicherheitsaspekt eine Erstöffnungsanzeige. Mittels des beschriebenen Aufbaus des Multifunktionsetiketts ist eine digitale Erstöffnungsfunktion in ein Etikett mit gleichzeitiger optischer Anzeige integriert. Das Öffnen und Auslösen der Kontrollfunktion ist dabei vorzugsweise so ausgestaltet, dass im Vergleich zu konventionellen Etiketten keine nennenswerte Erhöhung der Kräfte zum Öffnen erforderlich ist.

Die Materialschwächung der Trägerschicht ist zum Beispiel mittels eines Lasers ausgebildet. Mit Hilfe von Laserstrahlung kann gezielt Material der Trägerschicht präzise abgetragen oder zerstört werden, um eine gewünschte Schwächungsstruktur an und/oder in der Trägerschicht einzurichten. Beispielsweise kann die Materialschwächung der Trägerschicht eine Mehrzahl von kreisförmigen, spaltenförmigen und/oder eckigen Ausnehmungen umfassen. Eine oder mehrere solcher Ausnehmungen können oberflächlich ausgebildet sein oder die Trägerschicht durchdringen. Alternativ oder zusätzlich können Ausnehmungen oder Schwächungen in der Trägerschicht eingebracht sein, die die lokale Materialschwächung ausbilden oder mit ausbilden.

Die Materialschwächung der Trägerschicht ist vorzugsweise hinsichtlich einer Tiefe entlang der Stapelrichtung des Multifunktionsetiketts in Abstimmung auf eine Dicke der Trägerschicht, eine Form der Detektionsschleife und/oder eine Form der Elektronikeinheit ausgebildet. Ferner kann Materialschwächung der Trägerschicht bezogen auf die laterale Ausdehnung insbesondere flächig ausgebildet sein. Jeweils ist Materialschwächung der Trägerschicht einem vorgegebenen Bereich benachbart zu der Detektionsschleife zugeordnet. Dabei kann Materialschwächung zum Beispiel durchgehend unterhalb der Detektionsschleife ausgebildet sein oder auch mehrere Abschnitte aufweisen. Die Materialschwächung kann sich über eine gesamte Breite der Trägerschicht erstrecken oder anteilig vorgesehen sein.

Auch die Materialschwächung der Etikettenschicht kann flächig ausgebildet sein. Alternativ ist die Materialschwächung der Etikettenschicht linienförmig ausgebildet oder weist insbesondere linienförmige Elemente auf. Die Materialschwächung der Etikettenschicht ist insbesondere als eine Perforation, eine Schlitzung und/oder eine Stanzung ausgebildet und stellt eine vorgegebene Einreißrichtung der Etikettenschicht bereit. Insbesondere ist die Materialschwächung der Etikettenschicht hinsichtlich einer Tiefe durchdringend ausgebildet.

Die zuvor beschriebenen Ausdehnungen und Richtungen des Multifunktionsetiketts beziehen sich auf übliche Dimensionen eines Stapelaufbaus eines Etiketts. Das Transponderinlay und das Etikett sind direkt oder mit einer oder mehreren Zwischenschichten aufeinander angeordnet und definieren somit die Stapelrichtung des Multifunktionsetiketts. Entlang der Stapelrichtung sind jeweilige Dicken vorhandener Elemente und Tiefen der Materialschwächungen angegeben. Senkrecht dazu ist die laterale Ausdehnung des Multifunktionsetiketts angegeben, die üblicherweise überwiegend. Innerhalb einer solchen lateralen Haupterstreckungsebene sind Breiten oder Längen jeweiliger Elemente anzusetzen.

Gemäß einer weiteren Weiterbildung ist die Materialschwächung der Etikettenschicht bezogen auf die laterale Ausdehnung so ausgebildet, dass sie mindestens 50 % einer Ausdehnung der Materialschwächung der Trägerschicht bedeckt. Auf diese Weise kann eine besonders zuverlässige doppelte Erstöffnungsanzeige bereitgestellt werden, bei der die Trägerschicht und die Etikettenschicht bei einem Öffnungsvorgang des Gefäßes, an dem das Multifunktionsetikett betriebsgemäß angebracht ist, zeitgleich oder zeitnah nacheinander zusammen zerreißen. Die Materialschwächung der Etikettenschicht kann zum Beispiel als wellenförmige Perforation länger ausgebildet sein, als die darunter oder darüber liegende Materialschwächung der Trägerschicht. Bezogen auf eine Aussicht oder eine Ansicht von unten jeweils entlang der Stapelrichtung überlappen die Materialschwächungen zumindest abschnittsweise. Die Materialschwächungen können auch so ausgebildet sein, dass sie sich vollständig überdecken oder größtenteils überlappen.

Gemäß einer Weiterbildung weist das Multifunktionsetikett eine Klebeschicht auf, die zwischen der Trägerschicht und der Etikettenschicht angeordnet ist. In dem Bereich der Materialschwächungen zwischen der Trägerschicht und der Etikettenschicht ist bevorzugt ein klebefreier, klebeneutraler oder klebereduzierter Bereich ausgebildet. Die Klebeschicht kann zum Beispiel abschnittsweise an einer Unterseite der Etikettenschicht aufgebracht sein, welche dann auf das Transponderinlay geklebt wird. Ein klebefreier Bereich kann dabei im Bereich der miteinander gekoppelten Materialschwächungen vorgesehen sein, um ein besonders einfaches Öffnen des Gefäßes und Zerreißen des Multifunktionsetiketts zu ermöglichen. Die Klebeschicht kann aber auch vollständig aufgebracht und mittels eines Klebeschwächungsmittels hinsichtlich seiner adhäsiven Eigenschaften neutralisiert oder reduziert sein. Ein Klebeschwächungsmittel ermöglicht, dass die Klebeschicht abschnittsweise vorgegeben abgeschwächt ist und dass die Trägerschicht und die Etikettenschicht im Bereich der Materialschwächungen nicht oder klebereduziert miteinander gekoppelt sind. Der Bereich der Materialschwächungen ist insbesondere für einen Einsatz in einem Übergangsbereich des Gefäßes vorgesehen, in dem dieses getrennt und somit geöffnet werden kann.

Das Transponderinlay und das Etikett sind daher bevorzugt in Abstimmung auf das Gefäß ausgebildet, an dem das Multifunktionsetikett angebracht werden soll. Das Transponderinlay und das Etikett sind zum Beispiel bezogen auf einen applizierten Zustand des Multifunktionsetiketts an dem Gefäß so eingerichtet, dass die Trägerschicht und die Etikettenschicht abschnittsweise mit einem ersten Teil und einem zweiten Teil des Gefäßes gekoppelt sind, wobei die Teile des Gefäßes lösbar miteinander gekoppelt und bei einem Öffnungsvorgang voneinander entfernbar sind. Die Materialschwächungen der Trägerschicht und der Etikettenschicht sind demgemäß einem Übergang zwischen dem ersten und dem zweiten Teil des Gefäßes zugeordnet, sodass bei einem Öffnen des mit dem Multifunktionsetikett applizierten Gefäßes das Transponderinlay und das Etikett im Bereich der Materialschwächungen vorgegeben durchtrennbar sind und ein Abschnitt der Trägerschicht und ein Abschnitt der Etikettenschicht zusammen mit dem ersten Teil von dem zweiten Teil des Gefäßes entfernbar sind.

Das beschriebene Multifunktionsetikett eignet sich daher zum Beispiel zur Verwendung an einem pharmazeutischen Behälter, wie einer Spritze, einem Injektionsfläschchen oder einem Vial, um dessen Inhalt gegen Manipulationen zu schützen und eine besonders sichere und zuverlässige Erstöffnungsanzeige bereitzustellen. Das Multifunktionsetikett eignet sich ferner auch für Medizinprodukte, wie Pens und Autoinjektoren. Beispielsweise wird bei einem Abziehen einer Kappe von einem Spritzenkörper einer Spritze die Trägerschicht und somit die Detektionsschleife zerstört oder beschädigt und als Ereignis in einem Speicher der Elektronikeinheit gespeichert. Die Elektronikeinheit umfasst vorzugsweise eine Antennenstruktur und einen RFID-Chip, die signaltechnisch miteinander gekoppelt sind, und ein Auslesen des digitalen Erstöffnungsnachweises ermöglichen. Zudem erfolgt bei dem Öffnen der Spritze eine kontrollierte Beschädigung oder Zerstörung der Etikettenschicht, welche zusätzlich einen analogen, optischen Erstöffnungsnachweis liefert. Darüber hinaus kann das Multifunktionsetikett auch zur Kennzeichnung eines Gegenstandes eingerichtet sein und mittels der RFID-Funktionalität eine nutzbringende elektronische Kennzeichnung des Gegenstands oder Gefäßes ermöglichen.

Ferner kann das Multifunktionsetikett Sicherheitsmerkmale, wie eine Void-Schicht umfassen, die zum Beispiel in der Etikettenschicht angeordnet oder mit dieser gekoppelt ist. Die Void-Schicht kann beispielsweise bezogen auf die Stapelrichtung unterhalb der Etikettenschicht und oberhalb einer Klebstoffschicht angeordnet sein. Die Void-Schicht stellt einen Void-Effekt bereit, der einen Manipulationsschutz bietet. Zum Beispiel ist die Void-Schicht mit zwei oder mehreren unterschiedlich stark klebenden Strukturen oder Releaseabstufungen realisiert. Beispielsweise ist eine stärker klebende Struktur in Form eines Schriftzugs in der Void-Struktur implementiert, während andere Abschnitte der Void-Struktur schwächer klebend sind. Wird die Void-Struktur beziehungsweise das Multifunktionsetikett mit einer Void-Schicht auf einem zu kennzeichnenden Gegenstand aufgebracht, bleibt bei einem Ablösen des Multifunktionsetiketts zum Beispiel der stärker klebende Schriftzug an dem Gegenstand kleben, während die schwächer klebenden Abschnitte mit dem Multifunktionsetikett oder einem von dem Gegenstand abgelösten Etikettenabschnitt entfernt werden. Alternativ können die beschriebenen Strukturen auch umgekehrt hinsichtlich ihrer Klebestärke ausgebildet sein, sodass zum Beispiel die Struktur in Form eines Schriftzugs schwächer klebend ist.

Alternativ oder zusätzlich können Sicherheitsmerkmale in Form von Stanzungen vorgesehen sein, die eine vorgegebene Schwächungsstruktur einer Schicht des Multifunktionsetiketts einrichten. Somit können zum Beispiel Einreißpositionen bereitgestellt werden, an denen das Multifunktionsetikett bei einem Manipulationsversuch oder bei einem Öffnen des Gegenstands, an dem es appliziert ist, vorgegeben einreißt. Alternativ oder zusätzlich können auch weitere Perforationen in einer oder mehreren Schichten des Multifunktionsetiketts vorgesehen sein, die ein gezieltes Durch- oder Auftrennen einer jeweiligen Schicht ermöglichen.

Darüber hinaus kann es nutzbringend sein, dass das Multifunktionsetikett als Rundum- oder Überrundumetikett ausgebildet wird, um möglichst viel Oberfläche des Gefäßes abdecken zu können, sodass ein zuverlässiger Halt und/oder möglichst großer zusätzlicher Schutz durch das Multifunktionsetikett bereitgestellt wird. Das Multifunktionsetikett kann zum Beispiel auch so ausgebildet sein, dass es im Hinblick auf einen Einsatz an einer Spritze über die Spritzenschulter bis über den Verschluss führt und die entstehende Hülse über dem Verschluss verschließt. Dadurch kann auch der Schulter- und Verschlussbereich der Spritze oder des Gefäßes allgemein zusätzlich vor Licht/UV-Strahlungseinwirkung und gegen Gaseintritt geschützt werden. Alternativ oder zusätzlich können weitere Funktionalitäten, wie ein UV-/Lichtschutz, eine Barriereschutzfolie und/oder eine vorgesehene Cryo-Anwendung des Multifunktionsetiketts mit berücksichtigt werden, sodass entsprechende Funktionalitäten bei geeigneter Wahl eines Obermaterials der Etikettenschicht oder des Multifunktionsetiketts und/oder durch geeignete Wahl eines Klebstoffes integriert werden können. Abhängig von der vorgesehenen Anwendung kann insbesondere auch eine gezielte Wahl eines Klebstoffes nutzbringend sein, der zum Beispiel im Hinblick auf Cryo-Anwendungen ausgewählt wird.

Gemäß einem weiteren Aspekt der Erfindung umfasst ein System eine Ausgestaltung des zuvor beschriebenen Multifunktionsetiketts, das an einem Gegenstand oder Gefäß befestigt ist. Insbesondere kann eine Oberfläche des Gegenstands einen Untergrund für das Multifunktionsetikett ausbilden. Die Oberfläche des Gegenstands kann zum Beispiel durch eine Außenfläche eines Behälters, insbesondere durch die Mantelfläche einer Spritze oder eines Injektionsfläschchens, bereitgestellt sein. Dadurch, dass das System eine Ausgestaltung des beschriebenen Multifunktionsetiketts umfasst, sind Eigenschaften und Merkmale des Multifunktionsetiketts auch für das System offenbart und umgekehrt. Der Gegenstand des Systems ist zum Beispiel als Injektionsfläschchen, Vial oder Spritze realisiert und das angebrachte Multifunktionsetikett bietet einen zuverlässigen Schutz und eine doppelte Erstöffnungsanzeige für das pharmazeutische Produkt, das darin aufbewahrt wird. Zum Beispiel koppeln die Trägerschicht und die Etikettenschicht eine Spritzenkappe mit einem Spritzenkörper und bei einem Öffnen der Spritze wird das Multifunktionsetikett im Bereich der Materialschwächungen vorgegeben durchtrennt und ein Abschnitt der Trägerschicht sowie ein Abschnitt der Etikettenschicht zusammen mit der Spritzenkappe von dem Spritzenkörper entfernt, an dem Reste des Transponderinlays, insbesondere die Elektronikeinheit, und Reste des Etiketts verbleiben. Eine inverse Applikation des Multifunktionsetiketts an dem Gefäß ist entsprechend möglich, sodass zum Beispiel die Elektronikeinheit des Transponderinlays zum Beispiel an der Spritzenkappe verbleibt.

Gemäß einem weiteren Aspekt der Erfindung umfasst ein Verfahren zum Herstellen eines Multifunktionsetiketts ein Bereitstellen eines Transponderinlays mit einer Elektronikeinheit und einer Detektionsschleife, die auf einer Trägerschicht des Transponderinlays angeordnet und signaltechnisch miteinander gekoppelt sind. Das Verfahren umfasst weiter ein Ausbilden einer lokalen Materialschwächung in die Trägerschicht im Bereich der Detektionsschleife. Das Verfahren umfasst weiter ein Bereitstellen eines Etiketts mit zumindest einer Etikettenschicht, und ein Ausbilden einer lokalen Materialschwächung in die Etikettenschicht. Das Verfahren umfasst außerdem ein Koppeln des Transponderinlays und des Etiketts miteinander, sodass sich die Materialschwächung der Etikettenschicht und die Materialschwächung der Trägerschicht bezogen auf eine laterale Ausdehnung des Multifunktionsetiketts zumindest abschnittsweise überlappen.

Das Ausbilden der lokalen Materialschwächung in die Trägerschicht kann insbesondere durch Entfernen von Material der Trägerschicht mittels eines Lasers durchgeführt werden. Das Ausbilden der lokalen Materialschwächung in die Etikettenschicht kann insbesondere mittels Einbringen einer Perforation, einer Schlitzung und/oder einer Stanzung in die Etikettenschicht erfolgen.

Das Verfahren kann ferner ein Bereitstellen einer Klebeschicht umfassen, sodass diese zwischen der Trägerschicht und der Etikettenschicht angeordnet ist und das Transponderinlay und das Etikett adhäsiv miteinander koppelt. Das Verfahren kann außerdem ein Ausbilden eines klebeneutralen oder klebereduzierten Bereichs zwischen der Trägerschicht und der Etikettenschicht in dem Bereich der Materialschwächungen umfassen.

Dadurch, dass das jeweilige Verfahren insbesondere zum Anfertigen einer Ausgestaltung des zuvor beschriebenen Multifunktionsetiketts eingerichtet ist, sind Eigenschaften und Merkmale des Multifunktionsetiketts auch für das Herstellungsverfahren offenbart und umgekehrt.

Eine Verarbeitung einer Vielzahl von Multifunktionsetiketten kann insbesondere in einem Rolle-zu-Rolle-Prozess mit einem Vor- und Nachlauf durchgeführt werden. Dabei können Materialbahnen für das Transponderinlay bzw. die Trägerschicht und für das Etikett bzw. die Etikettenschicht bereitgestellt, verarbeitet und miteinander gekoppelt werden, um eine Vielzahl von Multifunktionsetiketten auf einer Etikettenrolle auszubilden. Dabei können ferner Druck-, Stanz- und/oder Schnittvorgänge durchgeführt werden, um zum Beispiel Format- und/oder Funktionsstanzungen vorzunehmen. Die Elektronikeinheit kann zum Beispiel wie auch die Detektionsschleife auf der Trägerschicht aufgedruckt und miteinander gekoppelt werden.

Mittels des Multifunktionsetiketts ist eine besonders zuverlässige Erstöffnungsanzeige für ein pharmazeutisches Gefäß realisierbar, dass in einem Etikett sowohl eine elektronische als auch einen optischen Erstöffnungsnachweis vereint und zudem so angefertigt werden kann, dass es aufwandsarm trennbar ist. Es werden keine zusätzlichen Anstanzungen benötigt, die einen relativ hohen Kraftaufwand beim Auslösen einer Tamperfunktion und gegebenenfalls einen undefinierten Aufriss bereitstellen. Das Multifunktionsetikett kann kostengünstig hergestellt und übersichtlich verarbeitet werden.

Die Trägerschicht realisiert ein Substrat des Transponderinlays und ist an einer Position gezielt geschwächt. Die Materialschwächung des Inlay-Substrats erfolgt über einen geeigneten selektiven Prozess, vorzugsweise mittels eines Lasers, sodass nur das Substrat kontrolliert beschädigt wird und dabei gleichzeitig die Detektionsschleife, ein Antennenmaterial und elektronische Komponenten des Transponderinlays unbeschädigt bleiben. Die Materialschwächung im Inlay-Substrat kann über eine gesamte Inlaybahnbreite integriert werden oder auf einen oder mehrere Teilbereiche beschränkt sein. Gleichzeitig kann die Materialschwächung zu einer Reduktion von Klebkräften in diesem Bereich beitragen. Das Substrat haftet nicht mehr bzw. nicht mehr vollständig in diesem Bereich auf einem Untergrund, wodurch die ungehinderte oder zumindest nicht erschwerte Öffnungsfunktion ausbildbar ist.

Die Materialschwächung im Inlay-Substrat kann in verschiedenen geometrischen Ausprägungen erfolgen, wie zum Beispiel mittels eines kreisförmigen, quadratischen oder rechteckigen Materialabtrags, und in verschiedenen Ausdehnungen eingefügt werden. Eine Tiefe des Materialabtrags kann an die Antennenstruktur oder die Detektionsschleife angepasst werden. Die Materialschwächung der Trägerschicht kann daher auch eine Tiefenmodulation aufweisen. Die Materialschwächung in der Etikettenschicht kann insbesondere als Perforationsstruktur mit verschiedenen geometrischen Formen ausgebildet werden, wie zum Beispiel Sinus-förmig, Reißverschluss-förmig, Puzzle-förmig und/oder als einfache Linie in Form einer oder mehrerer Schnitt-Steg Perforationen.

Die Detektionsschleife bildet eine Tamper-Loop und ist zum Beispiel, wie die Antennenstruktur der RFID-Funktionalität, als Aluminium-, Silber- und/oder Kupfer-Leiterbahn ausgebildet, die in sich geschlossen an Eingänge der Elektronikeinheit angeschlossen ist. Die Detektionsschleife bildet eine Sensorbahn, die aufgrund der im Inlay-Substrat gezielt eingebrachten Materialschwächung bei einem Öffnen vorgegeben zerstört oder beschädigt wird, sodass die Elektronikeinheit dies erfasst und ein entsprechendes Öffnungsereignis zum Beispiel bis zum Auslesen irreversibel digital abspeichert.

Im Folgenden sind Ausführungsbeispiele der Erfindung anhand schematischer Zeichnungen erläutert. Es zeigen:
- Figuren 1-2: Ausführungsbeispiele eines Multifunktionsetiketts in einer jeweiligen Aufsicht,
- Figuren 3-12: Ausführungsbeispiele für Komponenten oder Abschnitte des Multifunktionsetiketts in verschiedenen Ansichten,
- Figur 13: ein weiteres Ausführungsbeispiel des Multifunktionsetiketts in einer schematischen Seitenansicht, und
- Figur 14: ein Ablaufdiagramm für ein Verfahren zum Herstellen eines Multifunktionsetiketts nach den Figuren 1-13.

Elemente oder Merkmale gleicher Konstruktion oder Funktion sind figurenübergreifend mit den gleichen Bezugszeichen gekennzeichnet. Aus Gründen der Übersichtlichkeit sind gegebenenfalls nicht alle dargestellten Elemente oder Merkmale in sämtlichen Figuren mit zugehörigen Bezugszeichen gekennzeichnet.

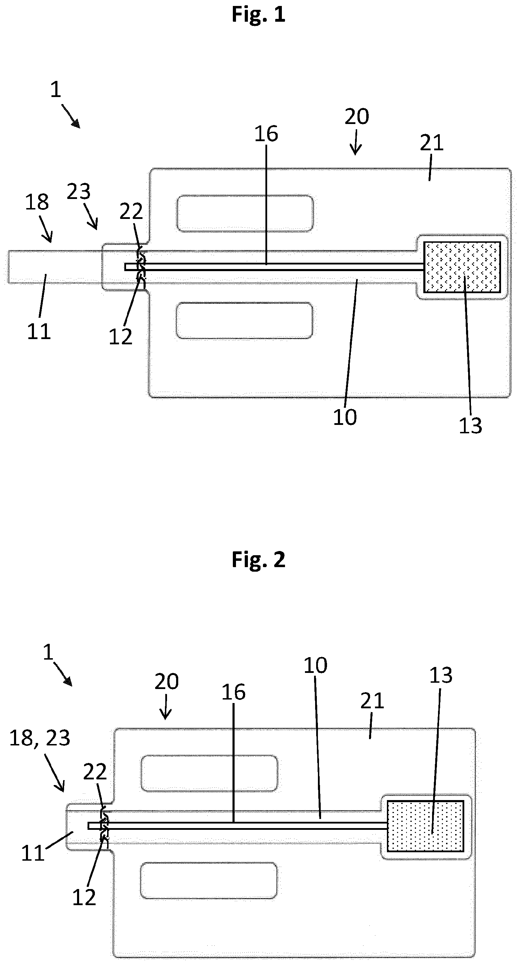

Die Figuren 1-2 zeigen jeweils in einer schematischen Aufsicht Ausführungsbeispiele eines Multifunktionsetiketts 1 für ein mehrteiliges Gefäß. Das Multifunktionsetikett 1 weist ein Transponderinlay 10 und ein Etikett 20 auf. Das Transponderinlay 10 umfasst eine Elektronikeinheit 13 und eine Detektionsschleife 16, die auf einer Trägerschicht 11des Transponderinlays 10 angeordnet und signaltechnisch miteinander gekoppelt sind. Die Trägerschicht 11 weist im Bereich der Detektionsschleife 16 eine lokale Materialschwächung 12 auf, die zum Beispiel mittels eines Lasers ausgebildet ist.

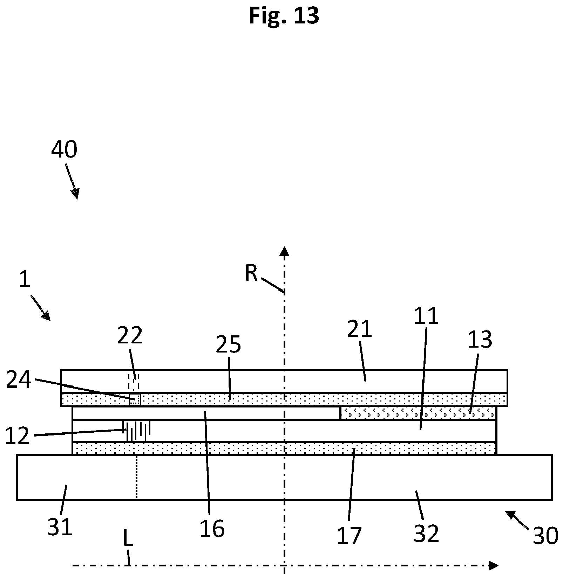

Das Etikett 20 umfasst zumindest eine Etikettenschicht 21, zum Beispiel in Form eines Folien- oder Papierelements. Die Etikettenschicht 21 weist eine lokale Materialschwächung in Form einer Perforation 22 auf. Das Transponderinlay 10 und die Etikettenschicht 21 sind unmittelbar oder mittelbar miteinander gekoppelt, sodass sich die Perforation 22 der Etikettenschicht 21 und die Materialschwächung 12 der Trägerschicht 11 bezogen auf eine laterale Ausdehnung L des Multifunktionsetiketts 1 zumindest abschnittsweise überlappen (s. auch Figur 13).

Das Etikett 20 ist zum Beispiel auf dem Transponderinlay 10 angeordnet und mittels einer Klebeschicht 25 mit diesem gekoppelt. In Bezug auf eine Stapelrichtung R des Multifunktionsetiketts 1 kann das Etikett 20 auch als Oberetikett bezeichnet werden, welches das Transponderinlay 10 bedeckt. In dieser Beschreibung beziehen sich Begriffe, wie "oben", "unten", "Oberseite", "Unterseite", "oberhalb" und "unterhalb", auf Ausrichtungen oder Orientierungen der jeweiligen Elemente, wie sie in den Figuren entlang der Stapelrichtung R illustriert sind. Eine jeweilige Dicke der illustrierten Schichten erstreckt sich daher entlang der Stapelrichtung R. Die Dicken der jeweiligen Schichten des Multifunktionsetiketts 1 können gleich oder unterschiedlich ausgebildet sein. Die Stapelrichtung R entspricht im Wesentlichen einer Oberflächennormalen der Oberfläche des Gefäßes, für das das Multifunktionsetikett 1 vorgesehen ist. Wie nachfolgend anhand der Figuren 1-14 erläutert wird, ist mittels des Multifunktionsetiketts 1 auf einfache und kostengünstige Weise ein zuverlässiger Schutz für pharmazeutische Produkte realisierbar.

Das Transponderinlay 10 und das Etikett 20 weisen jeweils einen vorspringenden Bereich 18, 23 auf, der insbesondere in Abstimmung auf das Gefäß 30 ausgebildet ist, an dem Multifunktionsetikett 1 angebracht werden soll. Die vorspringenden Bereiche 18, 23 können gleich groß (s. Figur 2) oder unterschiedlich groß (s. Figur 1) ausgebildet sein. Das Gefäß ist zum Beispiel als Spitze 30 mit einer Spritzenkappe 31 und einem Spritzenkörper 32 realisiert (s. Figur 13). Beim Öffnen der Spritze 30 wird Spritzenkappe 31 von dem Spritzenkörper 32 entfernt, zum Beispiel abgezogen und/oder abgedreht. Das Multifunktionsetikett 1 wird so an der Spritze 30 befestigt, dass sich die vorspringenden Bereiche 18, 23 an der Spritzenkappe 31 und der jeweils verbleibende Teil des Transponderinlays 10 und des Etiketts 20 an dem Spritzenkörper 32 befestigt sind, zum Beispiel mittels einer Klebeschicht 17. Die Materialschwächungen 12 und 22 sind dem Übergang zwischen der Spritzenkappe 31 und dem Spritzenkörper 32 zugeordnet und bilden einen jeweiligen Bereich, in dem die Trägerschicht 11 und die Etikettenschicht 21 kontrolliert durchtrennt werden können, sodass eine erfolgte Erstöffnung sowohl optisch sichtbar als auch elektronisch auslesbar ist.

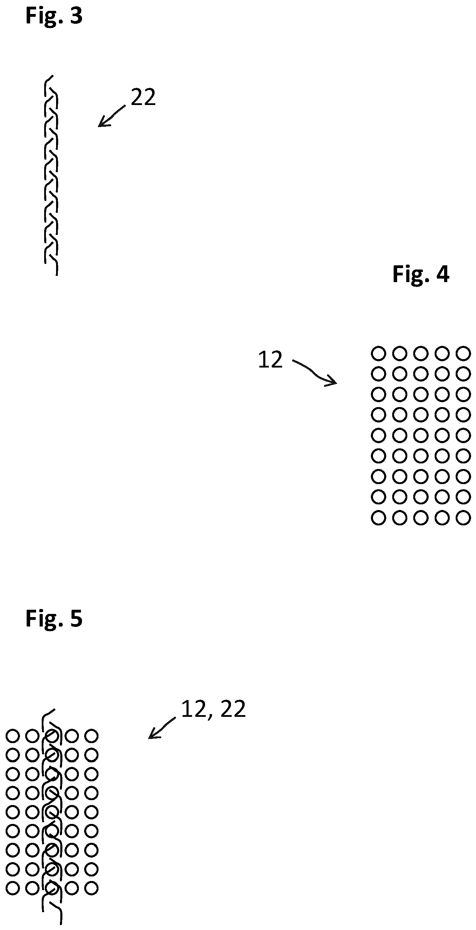

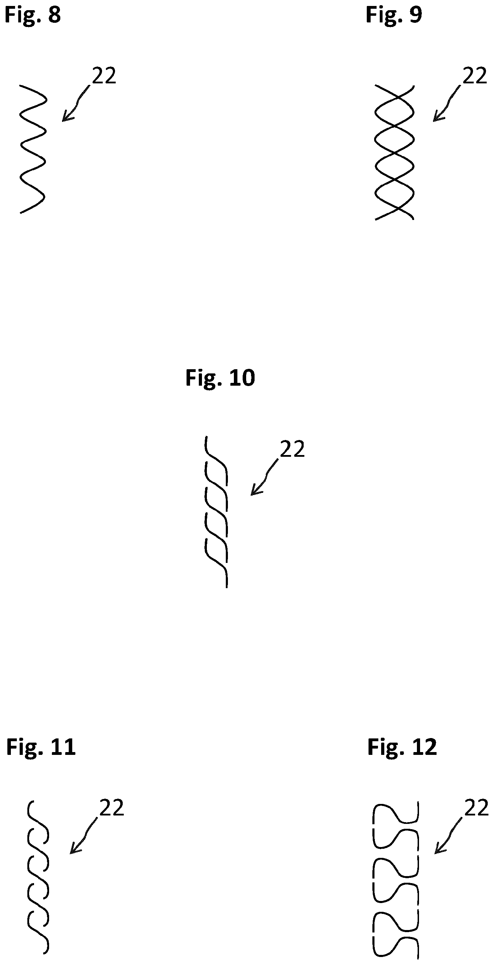

Die Figuren 3-5 illustrieren Elemente des Multifunktionsetiketts 1, die einen digitalen und analogen Erstöffnungsnachweis ermöglichen. Figur 3 zeigt eine Perforation in Form eines Reisverschlusses, der zum Beispiel durch eine Mehrzahl von Schlitzungen und/oder Stanzungen ausgebildet ist. Alternativ oder zusätzlich kann die Perforation Sinus-förmig (s. Figur 8), Doppelsinus-förmig (s. Figur 9), S-förmig (s. Figuren 10 und 11) und/oder Puzzle-förmig (s. Figur 12) oder mit einer anderen Form ausgebildet sein.

Die Figur 4 zeigt schematisch eine Ausführungsform der Materialschwächung 12, die zum Beispiel mittels eines Lasers in Form einer Mehrzahl von kreisförmigen Ausnehmungen ausgebildet ist. Mittels des Lasers kann gezielt an gewünschten Positionen an und/oder in der Trägerschicht 11 Material abgetragen und dadurch die Materialschwächung 12 ausbilden, die im Wesentlichen eine Sollreißstelle vorgibt. Die Figur 5 zeigt den Überlapp der Perforation 22 gemäß Figur 3 und der Materialschwächung 12 gemäß Figur 4.

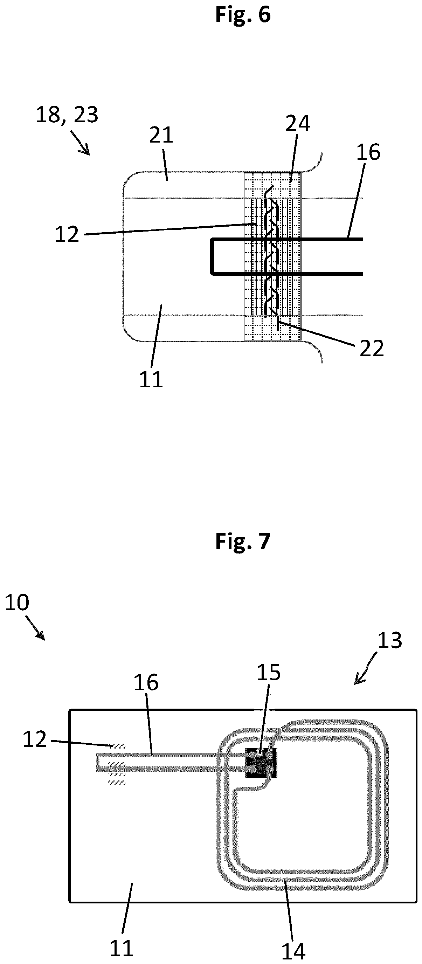

Die Figur 6 zeigt in einer schematischen Aufsicht eine detaillierte Ansicht der vorspringenden Bereiche 18 und 23. Im Bereich der Materialschwächungen 12, 22 weist das Multifunktionsetikett 1 vorzugsweise einen klebefreien oder klebeneutralen Bereich 24 auf. Auf diese Weise kann eine aufwandsarme Öffnung des Gefäßes und Zerreißen des Multifunktionsetikett 1 mit zweifachem Erstöffnungsnachweis eingerichtet werden. Zum Beispiel ist die Etikettenschicht 21 als ein Kunststoff- oder Folienelement oder als ein Papierelement ausgestaltet und reißt bei einem Öffnen der Spritze 30 entlang der Perforation 22 zuerst ein und übertragt dann die öffnende Kraft auf die darunter liegende Trägerschicht 11, welche beispielweise als eine Kunststofffolie ausgestaltet ist und entlang der Materialschwächung 12 aufreißt.

Die Figur 7 zeigt in einer schematischen Aufsicht eine Ausführungsform des Transponderinlays 10. Die Elektronikeinheit 13 umfasst zum Beispiel eine Antennenstruktur 14 und einen RFID-Chip 15, die signaltechnisch miteinander gekoppelt sind. Ferner ist die Detektionsschleife 16 mit zwei Eingängen des RFID-Chips 15 signaltechnisch gekoppelt und bildet eine in sich geschlossene Tamper-Loop oder Sensorbahn. Demgemäß sind für die Detektionsschleife 16 vorzugsweise separate Eingänge an dem RFID-Chip 15 vorgesehen. Eine Beschädigung oder Zerstörung der Detektionsschleife 16 kann aufgrund einer damit einhergehenden elektrischen Widerstandsänderung von dem RFID-Chip 15 erfasst und als Öffnungsereignis gespeichert werden.

Die Figur 13 illustriert in einer schematischen Seitenansicht ein System 40 mit einem Ausführungsbeispiel des Multifunktionsetiketts 1, das an einem Gefäß bzw. an der Spritze 30 angeordnet ist. In Bezug auf die Stapelrichtung R ist das Etikett 20 auf dem Transponderinlay 10 angeordnet, welches mittels der Klebeschicht 17 an einer Oberfläche eines Gefäßes bzw. an der äußeren Mantelfläche der Spritze 30 befestigt ist, sodass die Materialschwächungen 12, 22 dem Übergang zwischen der Spritzenkappe 31 und dem Spritzenkörper 32 zugeordnet sind. Das Etikett 20 bildet demgemäß ein Oberetikett und bedeckt das Transponderinlay 10, sodass sich die Perforation 22 und die Materialschwächung 12 überlappen. Vorzugsweise ist die Perforation 22 so in dem Oberetikett ausgebildet und positioniert, dass sie 50% oder mehr der Struktur der Materialschwächung 12 der Trägerschicht 11 überdeckt.

Das Multifunktionsetikett 1 bildet somit eine vorteilhafte Kombination aus einer Perforation 22 mit einer flächigen Materialschwächung 12. Die Materialschwächung 12 kann insbesondere tiefenselektiv ausgestaltet werden, wie dies in Figur 13 angedeutet ist. Die Perforationslinien im Oberetikett sind in Form und Lage auf den Bereich der Materialschwächung 12 in dem Transponderinlay 10 abgestimmt. Das Öffnen der Spritze 30 und Auslösen der Tamper-Funktion bzw. der Erstöffnungsnachweise des Multifunktionsetiketts 1 ist bevorzugt so gestaltet, dass keine nennenswerte Erhöhung der Kräfte zum Öffnen der Spritze 30 erforderlich ist. Dies kann zum Beispiel durch den klebeneutralen Bereich 24 zwischen den Materialschwächungen 12, 22 realisiert werden, um ein Verkleben der Trägerschicht 11 und der Etikettenschicht 21 an dieser Position zu verhindern und damit eine vereinfachte Öffnungshandhabung zu ermöglichen. Der klebeneutrale Bereich 24 kann zum Beispiel durch Applikation einer Klebeneutralisierung ausgebildet werden, welcher an der vorgesehenen Position auf oder in die Klebeschicht 25 des Etiketts 20 gegeben wird.

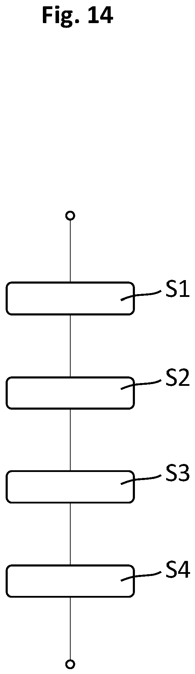

In Figur 14 ist schematisch ein Ablaufdiagramm für ein Verfahren zum Herstellen einer Ausgestaltung des Multifunktionsetiketts 1 dargestellt. In einem Schritt S1 wird das Transponderinlays 10 mit der Elektronikeinheit 13 und der Detektionsschleife 16 bereitgestellt. Die lokale Materialschwächung 12 kann zuvor oder nachträglich in der Trägerschicht 11 im Bereich der Detektionsschleife 16 ausgebildet werden.

Zum Beispiel kann in einem Schritt S2 die Trägerschicht 11 mittels eines Lasers bearbeitet und dadurch kontrolliert Material abgetragen werden, um die Materialschwächung 12 auszubilden. Alternativ oder zusätzlich kann die Trägerschicht 11 bereits in dem Schritt S1 bereits mit der Materialschwächung 12 bereitgestellt werden.

In einem weiteren Schritt S3 wird das Etikett 20 mit der Etikettenschicht 21 bereitgestellt. Auch bei der Etikettenschicht 21 kann die lokale Materialschwächung in Form einer Perforation 22 mit bereitgestellt oder in einem weiteren Schritt, zum Beispiel mittels einer Stanzmaschine, ausgebildet werden.

In einem weiteren Schritt S4 werden das Transponderinlay 10 und das Etikett 20 miteinander gekoppelt, beispielsweise mittels der Klebeschicht 25 miteinander verklebt, sodass sich die Perforation 22 der Etikettenschicht 21 und die Materialschwächung 12 der Trägerschicht 11 bezogen auf die laterale Ausdehnung L des Multifunktionsetiketts 1 zumindest abschnittsweise überlappen.

Der Bereich der Materialschwächung 12 in der Trägerschicht 11 muss sich nicht ausschließlich auf Stellen ohne Leiterbahnen erstrecken, sondern kann sich auch direkt unterhalb der Detektionsschleife 16 befinden und beeinflusst die Funktion der Antennenstruktur 14 nicht. Dies ist ermöglicht durch den Einsatz eines tiefenselektiven Schädigungsmechanismus zur Erzeugung der Materialschwächung 12 in der Trägerschicht 11. Das Material der Trägerschicht 11, die zum Beispiel als PET-Folienelement realisiert ist, wird kontrolliert geschwächt und in Bereichen ohne Leiterbahn bzw. lateral beabstandet zu der Detektionsschleife 16 vollständig durchbohrt. Die Detektionsschleife 16 realisiert eine Leiterbahn, die nicht beschädigt wird.

Das Transponderinlay 10 und das Etikett 20 weisen als Etikettenlagen somit jeweils eine Schwächung auf, die separat erzeugt wird. Anschließend werden die beiden Etikettenlagen geeignet kombiniert. Darüber hinaus kann die beschriebene Reihenfolge auch variieren. Ferner ist es aber auch denkbar, dass die Trägerschicht 11 und die Etikettenschicht 21 auch zuerst miteinander gekoppelt und nachträglich ein oder beide Materialschwächungen 12, 22 eingebracht werden, um das Multifunktionsetikett 1 zu realisieren.

Mittels der beschriebenen Ausführungsformen des Multifunktionsetiketts 1 kann jeweils auf einfache und kostengünstige Weise ein zuverlässiger Schutz für pharmazeutische Produkte realisiert werden. Insbesondere aufgrund der Kombination eines digitalen und eines analogen Erstöffnungsnachweises ermöglicht das Multifunktionsetikett 1 eine besonders sichere Anzeige eines manipulierten und/oder bereits geöffneten Behälters. Wird die Detektionsschleife 16 beschädigt, meldet der RFID-Chip 15 bei der nächsten Abfrage, dass der Tamper-Loop beschädigt wurde. Die Art und Weise wie dieses gemeldet wird, kann bei der Herstellung des Multifunktionsetiketts 1 und der RFID-Funktionalität des Transponderinlays 10 konfiguriert werden. Diese Meldung ist insbesondere irreversibel. Die Funktionalität des RFID-Chips 15 ist dadurch nicht beeinträchtigt.

Indem die Detektionsschleife 16 von einem Produktkörper bis auf den abnehmbaren Teil, zum Beispiel der Spritzenkappe 31, geführt wird (oder anders herum), kann die Erstöffnung eines Produktes digital angezeigt werden. Sobald der abnehmbare Teil vom Produkt entfernt wird, zerreißt die Detektionsschleife 16 mit der Perforation 22 im Oberetikett. Somit ist in dem Multifunktionsetikett 1 eine digitale mit einer analogen Erstöffnungsanzeige kombiniert. Da eine Basisantenne der RFID-Funktionalität unbeschädigt bleibt, können Produktdaten inklusive dem digitalen Erstöffnungshinweis weiterhin ausgelesen werden. Ein Kunde oder Patient wird somit zuverlässig vor einem bereits geöffneten Produkt gewarnt. Das Multifunktionsetikett 1 ist anwendbar bei jedem Produkt, das einen Basiskörper sowie einen abnehmbaren Teil umfasst, zum Beispiel Stifte, Autoinjektoren, Spritzen, Cap-Lock-Systeme, Syringe-Closure-Wrap.

Das Multifunktionsetikett 1 mit integrierter optischer und elektronischer Erstöffnungsanzeige kann auch auf einem Autoinjektor verklebt sein. Zum Beispiel ist das Etikett 20 als Hauptetikett auf dem zugehörigen Inj ektorkörper verklebt und wird zusammen mit der Detektionsschleife 16 des Transponderinlays 10 an mindestens einer Seite des Injektors auf eine abnehmbare Kappe des Injektors geführt.

### Bezugszeichenliste

- 1: Multifunktionsetikett
- 10: Transponderinlay
- 11: Trägerschicht des Transponderinlays
- 12: Materialschwächung des Transponderinlays
- 13: Elektronikeinheit des Transponderinlays
- 14: Antennenstruktur der Elektronikeinheit
- 15: Chip der Elektronikeinheit
- 16: Detektionsschleife
- 17: Klebeschicht
- 18: vorspringender Bereich des Transponderinlays
- 20: Etikett
- 21: Etikettenschicht des Etiketts
- 22: Perforation des Etiketts
- 23: vorspringender Bereich des Etiketts
- 24: klebeneutraler Bereich
- 25: Klebeschicht
- 30: Gefäß / Spritze
- 40: System

- L: laterale Richtung des Multifunktionsetiketts
- R: Stapelrichtung des Multifunktionsetiketts
- S(i): Schritte eines Verfahrens zum Herstellen eines Multifunktionsetiketts

## Patentansprüche

1. Multifunktionsetikett (1) für ein mehrteiliges Gefäß (30), aufweisend:
- ein Transponderinlay (10) mit einer Elektronikeinheit (13) und einer Detektionsschleife (16), die auf einer Trägerschicht (11) des Transponderinlays (10) angeordnet und signaltechnisch miteinander gekoppelt sind, wobei die Trägerschicht (11) im Bereich der Detektionsschleife (16) eine lokale Materialschwächung (12) aufweist,
- ein Etikett (20) mit zumindest einer Etikettenschicht (21), die eine lokale Materialschwächung (22) aufweist,
wobei das Transponderinlay (10) und die Etikettenschicht (21) unmittelbar oder mittelbar miteinander gekoppelt sind, sodass sich die Materialschwächung (22) der Etikettenschicht (21) und die Materialschwächung (12) der Trägerschicht (11) bezogen auf eine laterale Ausdehnung (L) des Multifunktionsetiketts (1) zumindest abschnittsweise überlappen.

2. Multifunktionsetikett (1) nach Anspruch 1, bei dem die Materialschwächung (12) der Trägerschicht (11) mittels eines Lasers ausgebildet ist.

3. Multifunktionsetikett (1) nach einem der vorhergehenden Ansprüche, bei dem die Materialschwächung (12) der Trägerschicht (11) eine Mehrzahl von kreisförmigen, spaltenförmigen und/oder eckigen Ausnehmungen umfasst.

4. Multifunktionsetikett (1) nach einem der vorhergehenden Ansprüche, bei dem die Materialschwächung (12) der Trägerschicht (11) hinsichtlich einer Tiefe entlang einer Stapelrichtung (R) des Multifunktionsetiketts (1) in Abstimmung auf eine Dicke der Trägerschicht (11), eine Form der Detektionsschleife (16) und/oder eine Form der Elektronikeinheit (13) ausgebildet ist.

5. Multifunktionsetikett (1) nach einem der vorhergehenden Ansprüche, bei dem bezogen auf die laterale Ausdehnung (L) die Materialschwächung (12) der Trägerschicht (11) flächig und die Materialschwächung (22) der Etikettenschicht (21) linienförmig ausgebildet sind.

6. Multifunktionsetikett (1) nach einem der vorhergehenden Ansprüche, bei dem bezogen auf die laterale Ausdehnung (L) die Materialschwächung (22) der Etikettenschicht (21) mindestens 50 % einer Ausdehnung der Materialschwächung (12) der Trägerschicht (11) bedeckt.

7. Multifunktionsetikett (1) nach einem der vorhergehenden Ansprüche, bei dem die Materialschwächung (22) der Etikettenschicht (21) eine Perforation, eine Schlitzung und/oder eine Stanzung umfasst.

8. Multifunktionsetikett (1) nach einem der vorhergehenden Ansprüche, aufweisend: eine Klebeschicht (25), die zwischen der Trägerschicht (11) und der Etikettenschicht (21) angeordnet ist, wobei in dem Bereich der Materialschwächungen (12, 22) zwischen der Trägerschicht (11) und der Etikettenschicht (21) ein klebeneutraler Bereich (24) ausgebildet ist.

9. Multifunktionsetikett (1) nach einem der vorhergehenden Ansprüche, bei dem das Transponderinlay (10) und das Etikett (20) in Abstimmung auf das Gefäß (30) ausgebildet sind, sodass bezogen auf einen applizierten Zustand des Multifunktionsetiketts (1) an dem Gefäß (30) die Trägerschicht (11) und die Etikettenschicht (21) abschnittsweise mit einem ersten Teil (31) und einem zweiten Teil (32) des Gefäßes (30) gekoppelt und die Materialschwächungen (12, 22) der Trägerschicht (11) und der Etikettenschicht (21) einem Übergang zwischen dem ersten und dem zweiten Teil (31, 32) des Gefäßes (30) zugeordnet sind, sodass bei einem Öffnen des mit dem Multifunktionsetikett (1) applizierten Gefäßes (30) das Transponderinlay (10) und das Etikett (20) im Bereich der Materialschwächungen (12, 22) vorgegeben durchtrennbar sind und ein Abschnitt der Trägerschicht (11) und ein Abschnitt der Etikettenschicht (21) zusammen mit dem ersten Teil (31) von dem zweiten Teil (32) des Gefäßes (30) entfernbar sind.

10. Multifunktionsetikett (1) nach einem der vorhergehenden Ansprüche, bei dem die Elektronikeinheit (13) eine Antennenstruktur (14) und einen RFID-Chip (15) umfasst, die signaltechnisch miteinander gekoppelt sind.

11. Verwendung eines Multifunktionsetiketts (1) nach einem der vorhergehenden Ansprüche für ein in mehrere Teile teilbares Gefäß (30) mit zumindest einem ersten Teil (31) und einem zweiten Teil (32), der miteinander koppelbar sind.

12. System (40), umfassend:
- ein in mehrere Teile teilbares Gefäß (30) mit zumindest einem ersten Teil (31) und einem zweiten Teil (32), und
- ein Multifunktionsetikett (1) nach einem der Ansprüche 1 bis 10, das so mit dem Gefäß (30) gekoppelt ist, dass die Trägerschicht (11) und die Etikettenschicht (21) abschnittsweise mit dem ersten Teil (31) und dem zweiten Teil (32) des Gefäßes (30) gekoppelt und die Materialschwächungen (12, 22) der Trägerschicht (11) und der Etikettenschicht (21) einem Übergang zwischen dem ersten und dem zweiten Teil (31, 32) des Gefäßes (30) zugeordnet sind, sodass bei einem Öffnen des mit dem Multifunktionsetikett (1) applizierten Gefäßes (30) das Transponderinlay (10) und das Etikett (20) im Bereich der Materialschwächungen (12, 22) vorgegeben durchtrennbar sind und ein Abschnitt der Trägerschicht (11) und ein Abschnitt der Etikettenschicht (21) zusammen mit dem ersten Teil (31) von dem zweiten Teil (32) des Gefäßes (30) entfernbar sind.

13. System (40), bei dem das Gefäß (30) als eine Spritze ausgebildet ist, wobei der erste Teil (31) als Spritzenkappe und der zweite Teil (32) als Spritzenkörper eingerichtet ist, und wobei die Trägerschicht (11) und die Etikettenschicht (21) die Spritzenkappe mit dem Spritzenkörper koppeln.

14. Verfahren zum Herstellen eines Multifunktionsetiketts (1), umfassend:
- Bereitstellen eines Transponderinlays (10) mit einer Elektronikeinheit (13) und einer Detektionsschleife (16), die auf einer Trägerschicht (11) des Transponderinlays (10) angeordnet und signaltechnisch miteinander gekoppelt sind,
- Ausbilden einer lokalen Materialschwächung (12) in die Trägerschicht (11) im Bereich der Detektionsschleife (16),
- Bereitstellen eines Etiketts (20) mit zumindest einer Etikettenschicht (21),
- Ausbilden einer lokalen Materialschwächung (22) in die Etikettenschicht (21), und
- Koppeln des Transponderinlays (10) und des Etiketts (20) miteinander, sodass sich die Materialschwächung (22) der Etikettenschicht (21) und die Materialschwächung (12) der Trägerschicht (11) bezogen auf eine laterale Ausdehnung (L) des Multifunktionsetiketts (1) zumindest abschnittsweise überlappen.

15. Verfahren nach Anspruch 14, bei dem das Ausbilden einer lokalen Materialschwächung (12) in die Trägerschicht (11) und/oder das Ausbilden einer lokalen Materialschwächung (22) in die Etikettenschicht (21) umfasst:
- Entfernen von Material der Trägerschicht (11) mittels eines Lasers, und/oder
- Einbringen einer Perforation, einer Schlitzung und/oder einer Stanzung in die Etikettenschicht (21).

16. Verfahren nach Anspruch 14 oder 15, umfassend:
- Bereitstellen einer Klebeschicht (25), sodass diese zwischen der Trägerschicht (11) und der Etikettenschicht (21) angeordnet ist, und
- Ausbilden eines klebeneutralen Bereichs (24) zwischen der Trägerschicht (11) und der Etikettenschicht (21) in dem Bereich der Materialschwächungen (12, 22).
